# EUROPEAN PATENT APPLICATION

(11) **EP 4 722 061 A1**
(43) Date of publication of application: **08.04.2026**
(21) Application number: 24810712.0
(22) Date of filing: 28.03.2024
(51) Int. Cl.: B60W 10/30, B60K 6/40, B60K 6/48, B60K 6/52, B60W 10/02, B60W 10/06, B60W 20/15, F02N 15/10, F16H 59/36, F16H 61/02, F16H 63/46

(54) **HYBRID VEHICLE**

(30) Priority: 24.05.2023 JP 2023085745
(71) Applicant: TOYOTA JIDOSHA KABUSHIKI KAISHA, Toyota-shi, Aichi 471-8571 (JP); AISIN CORPORATION, Aichi-ken, 448-8650 (JP)
(72) Inventor: KAJI, Fumiya, Kariya-shi, Aichi-ken 448-8650 (JP); TOIDA, Kazunori, Kariya-shi, Aichi-ken 448-8650 (JP); ASAURA, Shinya, Kariya-shi, Aichi-ken 448-8650 (JP); YOSHIDA, Michio, Kariya-shi, Aichi-ken 448-8650 (JP); NOGAWA, Shinichiro, Kariya-shi, Aichi-ken 448-8650 (JP); OSHIUMI, Yasuhiro, Kariya-shi, Aichi-ken 448-8650 (JP); NAMBA, Akihiro, Kariya-shi, Aichi-ken 448-8650 (JP); INDA, Keita, Kariya-shi, Aichi-ken 448-8650 (JP); HASAMA, Mitsuhiro, Kariya-shi, Aichi-ken 448-8650 (JP); TAKAKI, Wataru, Kariya-shi, Aichi-ken 448-8650 (JP)
(74) Representative: Cabinet Beau de Loménie
(86) International application number: PCT/JP2024/012753
(87) International publication number: WO 2024/241704

(57) **Abstract**

A hybrid vehicle includes an engine, a motor, a driving wheel, a torque converter provided in a power transmission path from the engine to the driving wheel, an oil pump pumping oil to the torque converter, a shutoff mechanism shutting off power transmission between the torque converter and the driving wheel, and a supply control device starting a supply process for supplying oil into the torque converter by driving the oil pump during traveling by the motor in which the shutoff mechanism shuts off the power transmission and the engine is stopped.

## Description

### TECHNICAL FIELD

The present invention relates to a hybrid vehicle.

### BACKGROUND ART

There is a technique for supplying oil into a torque converter by rotating a torque converter and driving an oil pump at the time of system activation (for example, see Patent Document 1).

### CITATION LIST

### PATENT LITERATURE

PTL 1: U.S. Patent Application Publication No. 2020/0079350

### SUMMARY OF THE INVENTION

### PROBLEMS TO BE SOLVED BY THE INVENTION

During traveling by a motor in which an engine and the torque converter are stopped, an amount of oil in the torque converter might decrease. As a result, the torque transmission efficiency of the torque converter might decrease when the engine is started, and the driving force of the vehicle might become insufficient.

It is therefore an object of the present invention to provide a hybrid vehicle that suppresses insufficiency of driving force at the time of engine start.

### MEANS FOR SOLVING THE PROBLEMS

The above objected is achieved by a hybrid vehicle including: an engine; a motor; a driving wheel; a torque converter provided in a power transmission path from the engine to the driving wheel; an oil pump pumping oil to the torque converter; a shutoff mechanism shutting off power transmission between the torque converter and the driving wheel; and a supply control device starting a supply process for supplying oil into the torque converter by driving the oil pump during traveling by the motor in which the shutoff mechanism shuts off the power transmission and the engine is stopped.

The supply control device may start the supply process in accordance with a correlation value correlated with an amount of oil in the torque converter.

The correlation value may be an elapsed time after rotational speed of the torque converter is equal to or lower than predetermined speed, and the predetermined speed may be lower than idle rotational speed of the engine.

The supply control device may start the supply process when the elapsed time is equal to or longer than a predetermined time.

A drive device rotating the torque converter may be included, wherein the supply control device may control the drive device such that the rotational speed of the torque converter is higher than the predetermined speed in the supply process.

The torque converter may rotate integrally with the engine, and the drive device may rotate the torque converter by rotating the engine.

The oil pump may be a mechanical oil pump rotating integrally with the torque converter.

The motor may be provided between the shutoff mechanism and the driving wheel.

The shutoff mechanism may be a transmission.

The oil pump may be an electric oil pump.

The motor may drive a driving wheel different from the driving wheel driven by the engine.

A clutch shutting off power transmission between the engine and the torque converter may be included, wherein the supply control device may drive the drive device in a state where the clutch is disconnected.

The oil pump may include a mechanical oil pump rotating integrally with the torque converter, and an electric oil pump.

### EFFECTS OF THE INVENTION

It is possible to provide a hybrid vehicle that suppresses insufficiency of driving force at the time of engine start.

### BRIEF DESCRIPTION OF THE DRAWINGS

[FIG. 1] FIG. 1 is a schematic configuration view of a hybrid vehicle.
[FIG. 2] FIG. 2 is a flow chart illustrating supply control.
[FIG. 3] FIG. 3 is a timing chart illustrating the supply control.
[FIG. 4] FIG. 4 is a schematic configuration view of a hybrid vehicle according to a first variation.
[FIG. 5] FIG. 5 is a schematic configuration view of a hybrid vehicle according to a second variation.
[FIG. 6] FIG. 6 is a schematic configuration view of a hybrid vehicle according to a third variation.
[FIG. 7] FIG. 7 is a schematic configuration view of a hybrid vehicle according to a fourth variation.
[FIG. 8] FIG. 8 is a schematic configuration view of a hybrid vehicle according to a fifth variation.

### MODES FOR CARRYING OUT THE INVENTION

### [Schematic Configuration of Hybrid Vehicle]

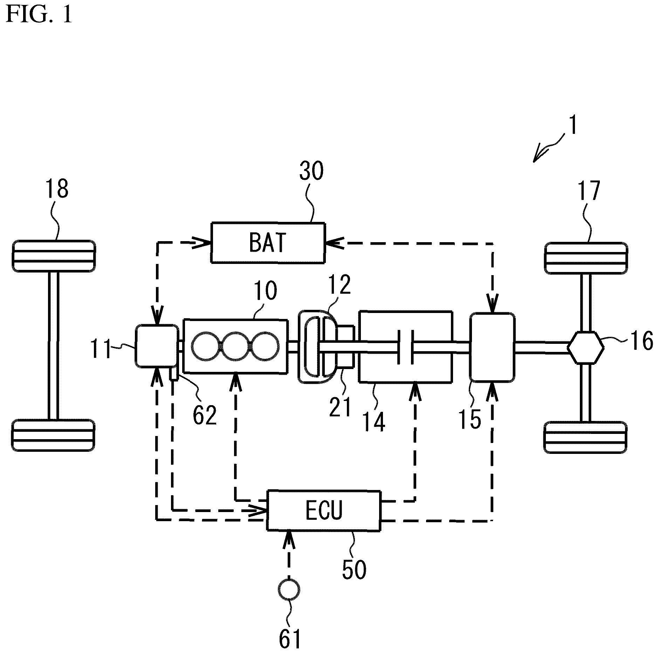

FIG. 1 is a schematic configuration view of a hybrid vehicle 1. The hybrid vehicle 1 includes an engine 10, a torque converter 12, an automatic transmission 14, a motor 15, a differential gear 16, rear wheels 17, and front wheels 18. The engine 10 and the motor 15 function as a driving power source. The engine 10 is a gasoline engine having a plurality of cylinders, but may be a diesel engine. The torque converter 12, the automatic transmission 14, the motor 15, and the differential gear 16 are provided in this order on a power transmission path from the engine 10 to the rear wheels 17. The rear wheel 17 is an example of a driving wheel, and the front wheel 18 is a driven wheel. The front wheels 18 may be driving wheels, and the rear wheels 17 may be driven wheels.

The engine 10 is provided with a starter 11. The starter 11 is driven by electric power supplied from a battery 30. The starter 11 performs motoring of the engine 10. The starter 11 is coupled to the torque converter 12 via a crankshaft of the engine 10. That is, the engine 10 and the torque converter 12 rotate integrally. Therefore, the starter 11 is an example of a drive device that drives the torque converter 12. The starter 11 generates electric power by the power from the engine 10. The battery 30 is charged with the electric power generated by the starter 11.

The motor 15 is driven by electric power supplied from the battery 30. The motor 15 generates a driving force of the vehicle in response to the electric power supplied from the battery 30. The motor 15 generates electric power by the power from the engine 10 and the rear wheel 17. The electric power generated by the motor 15 is charged in the battery 30.

The torque converter 12 is a fluid coupling having a torque amplifying function. A mechanical oil pump 21 is rotated to pump oil to the torque converter 12 and the automatic transmission 14. The mechanical oil pump 21 rotates integrally with the torque converter 12.

The automatic transmission 14 is a stepped transmission that switches the gear ratio in multiple stages. The automatic transmission 14 connects or disconnects an input shaft connected to the torque converter 12 and an output shaft connected to the motor 15. The disconnection between the input shaft and the output shaft is achieved by a neutral state in which a plurality of engagement elements of the automatic transmission 14 are disconnected. When the automatic transmission 14 disconnects the input shaft and the output shaft from each other, power transmission between the torque converter 12 and the motor 15 is interrupted. The automatic transmission 14 is an example of a shutoff mechanism.

The hybrid vehicle 1 is provided with an electronic control unit (ECU) 50 as part of the hybrid vehicle. The ECU 50 is an electronic control unit that includes an arithmetic processing circuit that performs various types of arithmetic processing related to travel control of the vehicle and a memory that stores control programs and date. The ECU 50 is an example of a supply control device. The ECU 50 controls driving of the engine 10, the starter 11, the automatic transmission 14, and the motor 15.

An ignition switch 61 and a rotational speed sensor 62 are connected to the ECU 50. The ignition switch 61 detects ON/OFF of the ignition. The rotational speed sensor 62 detects rotational speed of the starter 11. As described above, the starter 11 and the torque converter 12 rotate integrally. Therefore, the rotational speed of the starter 11 is the same as rotational speed of the torque converter 12.

The ECU 50 causes the hybrid vehicle 1 to travel in one of the motor travel mode and the hybrid travel mode. In the motor travel mode, the hybrid vehicle 1 travels by the motor 15 in a state where the automatic transmission 14 interrupts the power transmission between the torque converter 12 and the motor 15. In the hybrid travel mode, the hybrid vehicle 1 travels by at least the engine 10 in a state where the automatic transmission 14 ensures the power transmission described above. For example, when the required driving force for the hybrid vehicle 1 becomes equal to or greater than a threshold value, the travel mode is switched from the motor travel mode to the hybrid travel mode. When a charge amount of the battery 30 becomes equal to or less than a threshold value, the travel mode is switched from the motor travel mode to the hybrid travel mode.

### [Supply Control]

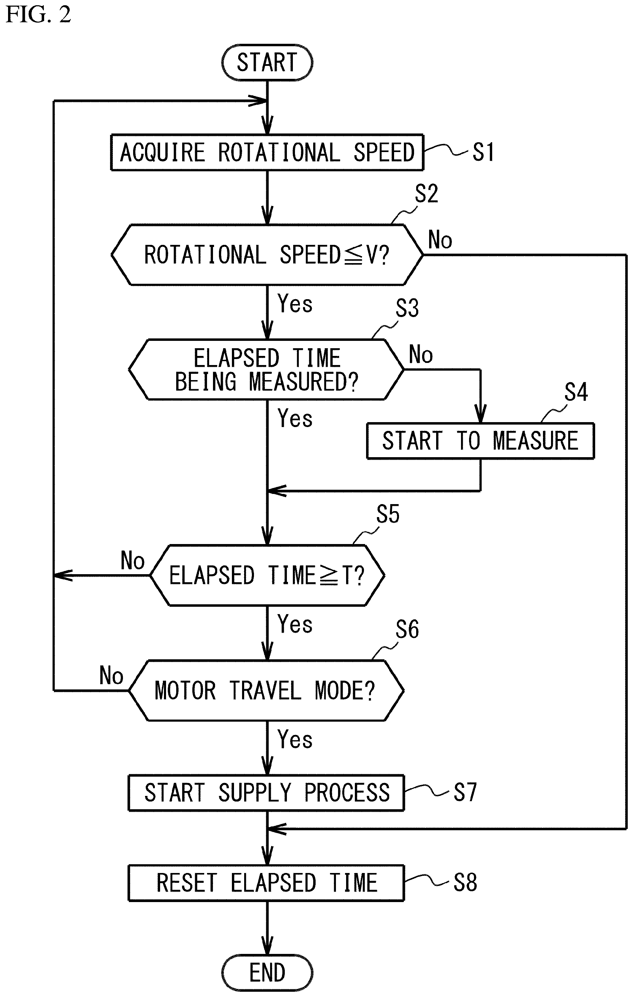

FIG. 2 is a flowchart illustrating the supply control. This supply control is repeatedly executed when the ignition is turned on. First, the ECU 50 acquires the rotational speed of the torque converter 12 based on the rotational speed sensor 62 (step S1).

Next, the ECU 50 determines whether or not the rotational speed of the torque converter 12 is equal to or lower than predetermined speed V (step S2). The predetermined speed V is set to rotational speed at which an amount of oil in the torque converter 12 starts to decrease. When the rotational speed of the torque converter 12 is higher than the predetermined speed V, the oil in the torque converter 12 is held in the torque converter 12 by the action of centrifugal force. When the rotational speed of the torque converter 12 is equal to or lower than the predetermined speed V, the action of the centrifugal force on the oil in the torque converter 12 decreases. As a result, the oil in the torque converter 12 flows out to an oil circulation path connected to the torque converter 12. The predetermined speed V is lower than idle rotational speed of the engine 10. The idle rotational speed is rotational speed of the engine 10 in an idle operation state. The idle rotational speed corresponds to minimum rotational speed during driving of the engine 10. In the case of No in step S2, the ECU 50 resets an elapsed time (step S8), as described in detail later.

In the case of Yes in step S2, the ECU 50 determines whether or not the elapsed time from the determination of Yes in Step S2 is being measured (Step S3).
In the case of No in step S3, the ECU 50 starts to measure the elapsed time from the determination of Yes in Step S2 (Step S4). As the elapsed time is longer, the amount of oil in the torque converter 12 decreases. Therefore, the elapsed time is an example of a correlation value correlated with the amount of oil in the torque converter 12. The measurement of the elapsed time is continued even in a soak state in which the ignition is turned off.

In the case of Yes in step S3 or after execution of step S4, the ECU 50 determines whether or not the elapsed time is equal to or longer than a predetermined time T (step S5). The predetermined time T is set to a time during which the amount of oil decreases to a predetermined amount A after the determination of Yes in step S2. When the amount of oil in the torque converter 12 decreases to the predetermined amount A or less, the torque transmission efficiency of the torque converter 12 decreases and the driving force of the hybrid vehicle 1 at the time of starting the engine 10 becomes insufficient.

In the case of No in step S5, the ECU 50 executes the processing of step S1 and subsequent steps again. In the case of Yes in step S5, the ECU 50 determines whether or not the vehicle is traveling in the motor travel mode (step S6). In the case of No in step S6, the ECU 50 executes the processing of step S1 and subsequent steps again.

In the case of Yes in step S6, the ECU 50 starts the supply process (step S7). Specifically, the ECU 50 controls the starter 11 to rotate the torque converter 12 at rotational speed higher than the predetermined speed V. Thus, the oil remaining in the torque converter 12 is held in the torque converter 12 by the action of the centrifugal force. That is, the outflow of oil from the torque converter 12 is suppressed. In addition, the mechanical oil pump 21 is driven and oil is pumped to the torque converter 12 in a state in which the outflow of oil from the torque converter 12 is suppressed. In this way, oil is supplied into the torque converter 12 during traveling in the motor travel mode. The driving time of the starter 11 in the supply process is set in advance to a driving time at which the oil in the torque converter 12 reaches a desired amount. Next, the ECU 50 resets the elapsed time (step S8).

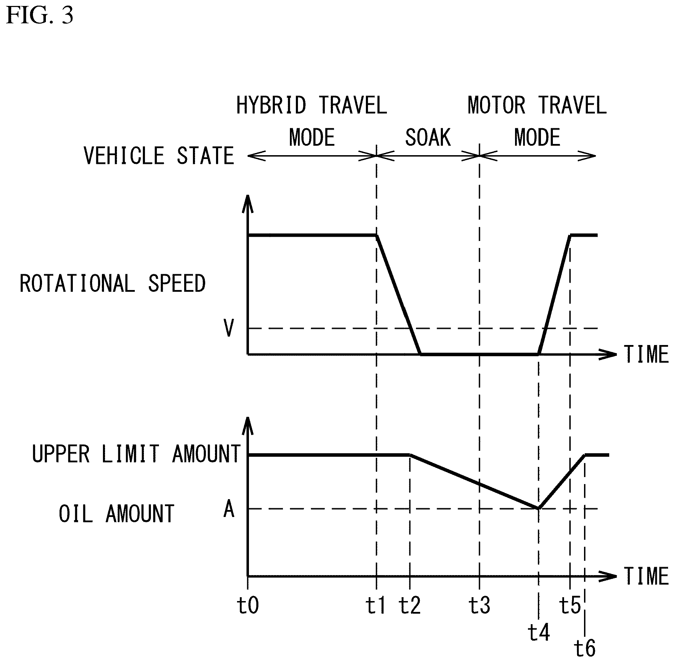

FIG. 3 is a timing chart illustrating supply control. FIG. 3 illustrates the vehicle state, the rotational speed of the torque converter 12, and the amount of oil in the torque converter 12. In the hybrid travel mode, the amount of oil in the torque converter 12 is maintained at an upper limit amount (time t0). When the ignition is turned off and the vehicular state becomes the soak state, the rotational speed of the torque converter 12 starts to decrease (time t1). When the rotational speed of the torque converter 12 becomes equal to or lower than the predetermined speed V, the amount of oil in the torque converter 12 starts to decrease, and the measurement of the elapsed time described above is started (time t2). Even when the ignition is turned on and traveling in the motor travel mode is started, the rotational speed of the torque converter 12 is equal to or lower than the predetermined speed V. Therefore, the measurement of the elapsed time is continued (time t3). When the elapsed time reaches the predetermined time T or more, the torque converter 12 is rotated by the starter 11 to drive the mechanical oil pump 21. As a result, the amount of oil in the torque converter 12 starts to increase (time t4). Since the rotational speed of the starter 11 is maintained constant, the rotational speed of the torque converter 12 is also maintained constant (time t5). Thereafter, the amount of oil in the torque converter 12 increases to the upper limit amount (time t6).

As described above, oil can be supplied into the torque converter 12 during traveling in the motor travel mode. Thus, the torque transmission efficiency of the torque converter 12 at the time of starting the engine 10 is ensured. Therefore, it is possible to eliminate the shortage of the driving force of the hybrid vehicle 1 at the start of the engine 10.

As illustrated in FIG. 1, the torque converter 12 and the mechanical oil pump 21 rotate integrally. Therefore, the single starter 11 can rotate the torque converter 12 to drive the mechanical oil pump 21. Thus, the number of components is reduced in the present embodiment as compared with the case where the motor for rotating the torque converter 12 and the motor for driving the mechanical oil pump 21 are separately provided.

As illustrated in FIG. 1, the automatic transmission 14 is an interrupting mechanism that interrupts power transmission between the torque converter 12 and the motor 15. Therefore, the number of components is reduced in the present embodiment as compared with a case where such a shutoff mechanism is provided separately from the automatic transmission 14. Instead of the automatic transmission 14, a continuously variable transmission and a clutch may be provided. The clutch is provided on a power transmission path between the torque converter 12 and the continuously variable transmission. In this case, the clutch corresponds to the shutoff mechanism.

As illustrated in FIG. 1, the motor 15 is provided between the automatic transmission 14 and the rear wheel 17 which is a driving wheel. Therefore, in the motor travel mode, the motor 15 rotates in a state of being disconnected from the torque converter 12 and the mechanical oil pump 21. Therefore, the rotational load of the motor 15 is reduced. Therefore, the traveling distance in the motor travel mode can be secured.

In the present embodiment described above, the predetermined speed V is set to rotational speed at which the amount of oil in the torque converter 12 starts to decrease. However, the predetermined speed V is not limited to this rotational speed. As described above, the predetermined speed V may be lower than the idle rotational speed of the engine 10. This is because when the predetermined speed V is lower than the idle rotational speed of the engine 10, it can be predicted that the engine 10 will stop. Therefore, for example, the predetermined speed V may be the rotational speed of the torque converter 12 immediately before the amount of oil starts to decrease. The predetermined speed V may be rotational speed of the torque converter 12 after the amount of oil starts to decrease.

In the above-described embodiment, the predetermined time T is set to a time during which the amount of oil decreases to the predetermined amount A after the determination of Yes in step S2. However, the predetermined time T is not limited to this time. For example, the predetermined time T may be a time immediately before the amount of oil decreases to the predetermined amount A after the determination of Yes in Step S2. This is because the shortage of the driving force of the hybrid vehicle 1 at the start of the engine 10 can be eliminated by executing the supply processing immediately before the amount of oil decreases to the predetermined amount A.

### [First Variation]

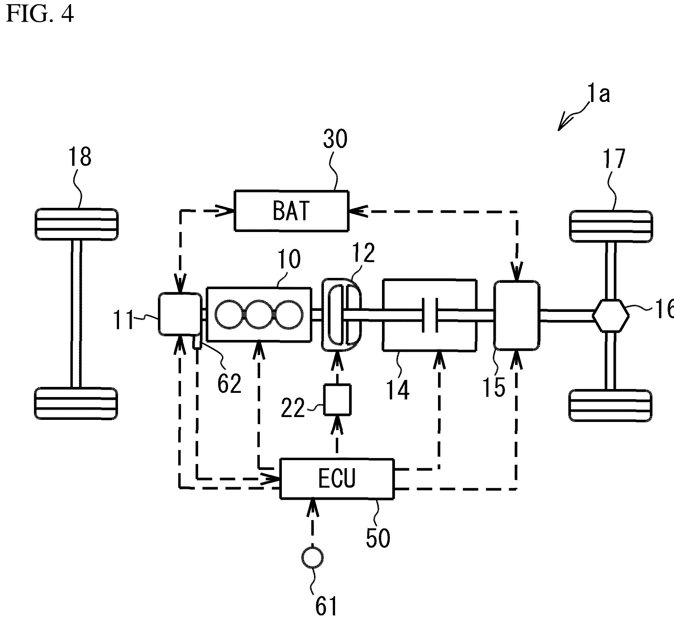

FIG. 4 is a schematic configuration view of a hybrid vehicle 1a according to a first variation. In the hybrid vehicle 1a, an electric oil pump 22 is used instead of the mechanical oil pump 21. The electric oil pump 22 is driven by a command from the ECU 50 based on the power supply from the battery 30 without depending on the driving of the engine 10.

In the supply process, the ECU 50 controls the starter 11 to rotate the torque converter 12 and drives the electric oil pump 22. Therefore, the ECU 50 can independently control the rotational speed of the starter 11 and the rotational speed of the electric oil pump 22. For example, the ECU 50 sets the rotational speed of the starter 11 as low as possible in the supply process. Thus, the supply process is executed while suppressing vibration caused by rotation of the engine 10.

### [Second Variation]

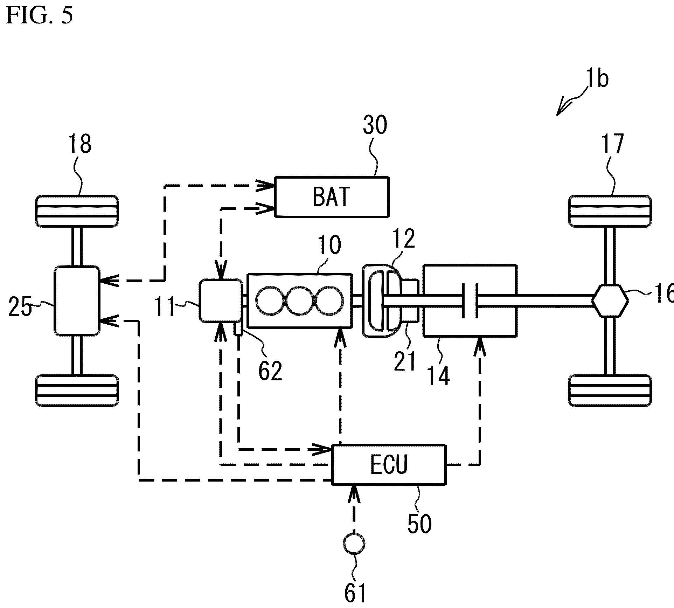

FIG. 5 is a schematic configuration view of a hybrid vehicle 1b according to a second variation. The hybrid vehicle 1b is not provided with the motor 15. The rear wheel 17 is driven only by the engine 10. The hybrid vehicle 1b is provided with a motor 25. The motor 25 drives the front wheels 18. In the hybrid vehicle 1 or the hybrid vehicle 1a, the motor 15 is connected to an input shaft of the automatic transmission 14.

In the hybrid vehicle 1b, the motor 25 directly drives the front wheels 18. Therefore, the rotational load of the motor 25 in the motor travel mode is reduced. The front wheel 18 is an example of a driving wheel different from the rear wheel 17.

Note that the engine 10 may drive the front wheels 18 and the motor 25 may drive the rear wheels 17. Instead of or in addition to the mechanical oil pump 21, the electric oil pump 22 may be provided.

### [Third Variation]

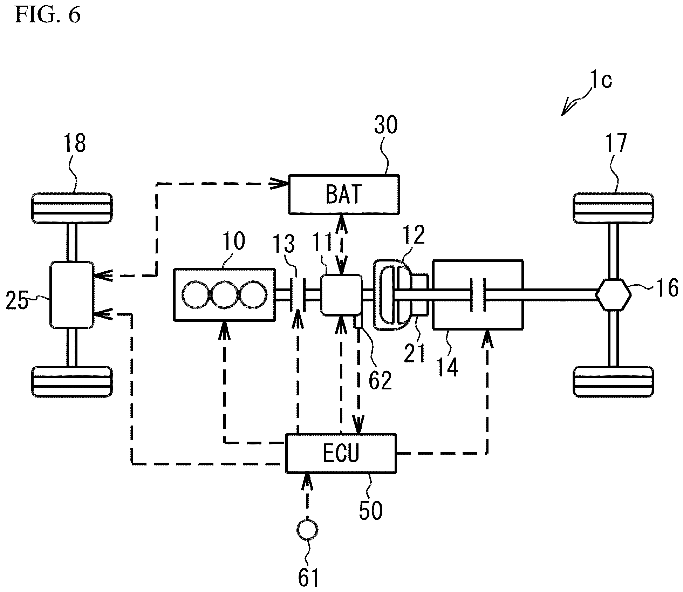

FIG. 6 is a schematic configuration view of a hybrid vehicle 1c according to a third variation. A clutch 13 is provided on a power transmission path between the engine 10 and the starter 11. In the supply process, the ECU 50 releases the clutch 13 and drives the starter 11. Therefore, the starter 11 can rotate the torque converter 12 without rotating the engine 10. Thus, an increase in vibration caused by the rotation of the engine 10 is suppressed. Also, the power consumption of the starter 11 is reduced.

### [Fourth Variation]

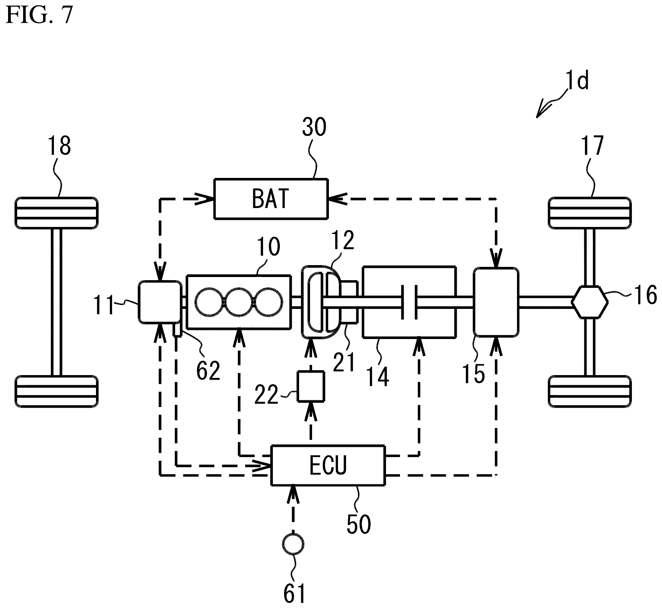

FIG. 7 is a schematic configuration view of a hybrid vehicle 1d according to a fourth variation. The hybrid vehicle 1d includes the mechanical oil pump 21 and the electric oil pump 22. In the supply process, the ECU 50 drives both the mechanical oil pump 21 and the electric oil pump 22. Thus, the oil is quickly supplied into the torque converter 12.

### [Fifth Variation]

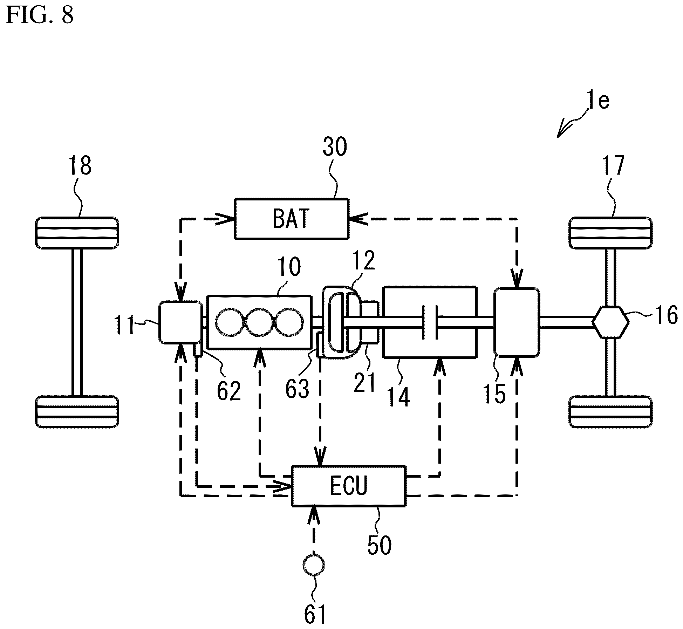

FIG. 8 is a schematic configuration view of a hybrid vehicle 1e according to a fifth variation. The hybrid vehicle 1e is provided with a liquid level sensor 63 for detecting a position of the surface of oil in the torque converter 12. The liquid level sensor 63 is connected to the ECU 50. The ECU 50 starts the supply process when the detection value of the liquid level sensor 63 indicates that the amount of oil in the torque converter 12 is equal to or lower than the predetermined amount A. The detection value of the liquid level sensor 63 is an example of a correlation value. In the fifth variation, the rotational speed sensor 62 may not be provided.

Although the starter 11 is controlled to rotate the torque converter 12 at a rotational speed higher than the predetermined speed V in the supply process in the above-described embodiment and variations, the present invention is not limited to this. That is, in the supply process, oil may be supplied into the torque converter 12 by at least one of the mechanical oil pump 21 and the electric oil pump 22 without driving the starter 11.

Some embodiments of the present invention have been described. However, the present invention is not limited to these specifically described embodiments but may have various variations and alterations within the scope of the claimed invention.

## Claims

1. A hybrid vehicle comprising:
an engine;
a motor;
a driving wheel;
a torque converter provided in a power transmission path from the engine to the driving wheel;
an oil pump pumping oil to the torque converter;
a shutoff mechanism shutting off power transmission between the torque converter and the driving wheel; and
a supply control device starting a supply process for supplying oil into the torque converter by driving the oil pump during traveling by the motor in which the shutoff mechanism shuts off the power transmission and the engine is stopped.

2. The hybrid vehicle according to claim 1, wherein the supply control device starts the supply process in accordance with a correlation value correlated with an amount of oil in the torque converter.

3. The hybrid vehicle according to claim 2, wherein
the correlation value is an elapsed time after rotational speed of the torque converter is equal to or lower than predetermined speed, and
the predetermined speed is lower than idle rotational speed of the engine.

4. The hybrid vehicle according to claim 3, wherein the supply control device starts the supply process when the elapsed time is equal to or longer than a predetermined time.

5. The hybrid vehicle according to claim 4, comprising a drive device rotating the torque converter,
wherein the supply control device controls the drive device such that the rotational speed of the torque converter is higher than the predetermined speed in the supply process.

6. The hybrid vehicle according to claim 5, wherein
the torque converter rotates integrally with the engine, and
the drive device rotates the torque converter by rotating the engine.

7. The hybrid vehicle according to any one of claims 1 to 6, wherein the oil pump is a mechanical oil pump rotating integrally with the torque converter.

8. The hybrid vehicle according to any one of claims 1 to 6, wherein the motor is provided between the shutoff mechanism and the driving wheel.

9. The hybrid vehicle according to any one of claims 1 to 6, wherein the shutoff mechanism is a transmission.

10. The hybrid vehicle according to any one of claims 1 to 6, wherein the oil pump is an electric oil pump.

11. The hybrid vehicle according to any one of claims 1 to 6, wherein the motor drives a driving wheel different from the driving wheel driven by the engine.

12. The hybrid vehicle according to claim 5, comprising a clutch shutting off power transmission between the engine and the torque converter,
wherein the supply control device drives the drive device in a state where the clutch is disconnected.

13. The hybrid vehicle according to any one of claims 1 to 6, wherein the oil pump includes a mechanical oil pump rotating integrally with the torque converter, and an electric oil pump.
